# EUROPEAN PATENT SPECIFICATION

(11) **EP 4 101 949 B1**
(45) Date of publication and mention of the grant of the patent: **01.05.2024**
(21) Application number: 21178941.7
(22) Date of filing: 11.06.2021
(51) Int. Cl.: C25D 5/08, C25D 17/00, C25D 21/10

(54) **SYSTEM FOR A CHEMICAL AND/OR ELECTROLYTIC SURFACE TREATMENT OF A SUBSTRATE**
SYSTEM FÜR EINE CHEMISCHE UND/ODER ELEKTROLYTISCHE OBERFLÄCHENBEHANDLUNG EINES SUBSTRATS
SYSTÈME DE TRAITEMENT DE SURFACE CHIMIQUE ET/OU ÉLECTROLYTIQUE D'UN SUBSTRAT

(43) Date of publication of application: 14.12.2022
(73) Proprietor: Semsysco GmbH, 5020 Salzburg (AT)
(72) Inventor: GLEISSNER, Andreas, 9873 Döbriach (AT); TSCHINDERLE, Ulrich, 9500 Villach (AT)
(74) Representative: Maiwald GmbH

(56) References cited:
- EP-A1- 3 221 497
- EP-A1- 3 828 316
- CN-A- 111 020 652
- US-A1- 2013 186 852

## Description

### TECHNICAL FIELD

The present invention relates to a system of at least two distribution body elements for a chemical and/or electric surface treatment of a substrate, a modular distribution body comprising such a system and a manufacturing method for at least two distribution body elements.

### BACKGROUND ART

A substrate dimension of panels for producing printed circuit boards (PCBs) is significant increasing as a scaling technology advances in order to increase a manufacturing efficiency as well as to meet requirements for large size panels. The panels are already reaching single side lengths of more than 1800 mm, in some cases even more than 3000 mm. Therefore, requirements on an electroplating technology are becoming complex, especially regarding a homogenous plating thickness (uniformity) and a faster plating speed.

The best processing results are achieved today with a so called HSP system based on a High Speed Plating technology. In such a system, one or two HSP plates together with one or two substrates are immersed into a tank containing an electrolyte and one or several anodes. Within the tank, the electrolyte and a current distribution are directed towards a substrate surface through the HSP plate(s). For achieving a homogenous plating thickness and for avoiding plating difficulties at panel margins, it is essential that an active surface (current-permeable area) of the HSP plates matches a size of the substrate to be plated. Therefore, with the increasing substrate size, the size of the HSP plates has to increase as well, which is technologically very challenging and time consuming.

### SUMMARY

Hence, there may be a need to provide an improved system for distributing an electrolyte and/or a current distribution, which facilitates an electroplating of a large size substrate.

The problem is solved by the subject matter of the independent claims of the present invention, wherein further embodiments are incorporated in the dependent claims. It should be noted that the aspects of the disclosure described in the following apply to the system of at least two distribution body elements for a chemical and/or electric surface treatment of a substrate, the modular distribution body comprising such a system and the manufacturing method for at least two distribution body elements.

According to the present invention, a system of at least two distribution body elements for a chemical and/or electric surface treatment of a substrate is presented. In the system of at least two distribution body elements, each distribution body element has a plate shape and comprises jet openings for distributing a process fluid from inside the distribution body element to the substrate to be treated and drain openings for draining the process fluid and an electric current through the distribution body element. The process fluid is configured to return from the substrate as a cathode to an anode, whereas the electric current is configured to flow from the anode to the substrate as cathode. The drain openings extend throughout, from one side to an opposite side of the distribution body element and the jet openings extend from an interior of the distribution body element to a surface of the distribution body element facing the substrate. Each drain opening is surrounded by several jet openings. Each distribution body element has a connecting area configured to be connected to a connecting area of another distribution body element to form a modular distribution body comprising at least two distribution body elements. The distribution body elements are connectable next to each other, such that, when connected, the process fluid and/or electric current is configured to be provided through an active surface surrounded by the connecting areas.

The system according to the present invention allows a flexible application of the distribution body depending on a size of the substrate to be treated. In other words, a number and/or an arrangement of distribution body elements may be variably selected with respect to the size and/or a shape of the substrate. Conventionally, jet openings and/or drain openings of a distribution body, particularly for a HSP (High Speed Plating) system are manufactured by a milling process, in which each opening is drilled one by one to form holes for a process fluid and/or a current distribution. However, with increasing dimension of the distribution body due to the increasing size of the substrate, the milling process takes significantly longer, through which the milling process may be unstable and cause errors.

By combining several distribution body elements, which are relatively smaller than a targeted distribution body, such a large distribution body may be easily provided and process errors may be enormously reduced or even eliminated. Moreover, the substrate size may not be limited to the size of the distribution body anymore. Accordingly, a delivery time of the HSP system from a production site to a customer may be significantly reduced and the delivery time may not rely on a milling time anymore. Hence, the HSP system may become economically attractive even for very large size panel.

Further, the system according to the present invention may provide a uniform outflow of the electrolyte and/or the current distribution from the distribution body to the substrate. Particularly, it is essential to sustain a sufficient fluid pressure inside the distribution body from a margin to a center of the distribution body. To achieve this, a thickness of the distribution body has to be increased along with the increasing size of the distribution body. However, the thick distribution body may result in a considerable increase of milling time per hole for the jet and drain openings, hence a significant increase in milling time for the entire distribution body. In contrast, the system comprising several distribution body elements, which are connected to each other to form a larger distribution body, may not be limited to a processing ability of a milling machine. Hence, the distribution body may be provided with an accurate arrangement of the holes on the distribution body, in which a uniform outflow velocity and/or a sufficient fluid pressure may be ensured.

The chemical and/or electrolytic surface treatment of the substrate may be any material deposition, galvanizing coating, chemical or electrochemical etching, anodal oxidation, metal separation process or the like. The substrate may comprise a conductor plate, a semi-conductor substrate, a film substrate, an essentially plate-shaped, metal or metallized workpiece or the like. At least one substrate may be held by a substrate holder and immersed an electrochemical deposition tank containing a process fluid and/or an electrolyte for a current distribution.

The plate-shaped distribution body element may be configured to face the substrate. In other words, the plate-shaped distribution body element may be arranged parallel to a substrate surface to be plated. The distribution body element comprises a distributing surface or an active surface, through which a plurality of holes are formed. The plurality of holes serve as jet openings for distributing the process fluid from the inside the distribution body element to the substrate to accelerate a plating speed and/or as drain openings for distributing the process fluid and the electric current through the distribution body element from one side to an opposite side of the distribution body element. The drain openings and the jet openings may be arranged in a pattern to reach an optimum plating uniformity. A drain opening may have a larger diameter than a jet opening. According to the invention, the drain opening is surrounded by several jet openings, preferably several jet openings arranged in a circle around the drain opening. Some or all of the drain openings may be each surrounded by jet openings. According to the invention, the drain openings are formed throughout the entire distribution body element from one side to the opposite side of the distribution body element. In contrast, the jet openings extend from an interior of the distribution body element to a surface of the distribution body element facing the substrate. In other words, the jet openings extend substantially only through a part of the entire extension or thickness of the distribution body element, preferably through a half of the distribution body element. This may apply to a single, some or all of the drain openings and jet openings. Through the drain openings, the process fluid and the electric current flow in opposite directions relative to each other. According to the invention, "Used" process fluid is configured to return from the substrate as cathode to the anode, Whereas the electric current is configured to flow from the anode to the substrate as cathode.

The distribution body element may be made of electrically conductive polymers, electrically conductive ceramics, or metallic materials. The distribution body element can be also made of electrically nonconductive polymers, electrically nonconductive ceramics, or electrically nonconductive plastic materials.

The distribution body element may comprise the connecting area arranged parallel or perpendicular relative to the distributing surface. The connecting area may also surround the distributing surface of the distribution body element. The connecting area allows the distribution body element to be engaged with another distribution body element to extend the distributing surface. In other words, at least two, preferably several distribution body elements may be connected to each other via the connecting area to form a modular distribution body.

Accordingly, a size of the module may be variable according to a number of the distribution body elements to be combined. According to the invention, the distribution body elements are connectable next to each other such that the connected distribution body elements may form together a large distributing surface. Such a large distributing surface may be applied, for instance for a substrate with a length of more than 1800 mm or even more than 3000 mm. Accordingly, a large distributing surface may be realized by combining several distribution body elements. Since each distribution body element may be manufactured within a reliable processability of the milling machine, which may allow providing a reliable fluid pressure and/or a uniform flow of the electrolyte and/or the current distribution all over the distributing surface of the distribution body elements.

In an example, the connecting area of one distribution body element is configured to be releasably connected to the connecting area of another distribution body element. In other words, the distribution body elements connected to each other via the connecting area may be separated and assembled again in a different shape and/or size. Accordingly, a flexible use of the distribution body elements according to the shape and/or size of the substrate may be achieved.

In an example, the connecting area of one distribution body element is configured to be mechanically connected to the connecting area of another distribution body element. The connecting area may ensure a firm and reliable engagement of one distribution body element with an adjacent distribution body element. Hence, the connecting areas of the distribution body elements may be connected to each other by means of, for example welding, form-fitting, clips and/or hooks. Alternatively or additionally, the connecting areas of the adjacent distribution body elements may be also chemically bonded with each other. Alternatively or additionally, the connecting areas of the adjacent distribution body elements may be magnetically contactable to each other.

The distribution body elements may be essentially square or rectangular with connecting areas arranged at a rim and/or edge of the distribution body element. The distribution body elements may also have a puzzle piece shape with an integrated projection and/or recess as connecting area to be connected to each other in form of a puzzle.

In an example, a density of openings in the distribution body elements is at least about 50 per dm², preferably at least about 100 per dm², more preferably at least about 500 per dm², and even more preferably at least about 950 per dm². A milling machine forming the holes for jet openings and/or drain openings on the distribution body elements may be utilized for the distribution body element having a processable size, instead of a single distribution body in a large size. Accordingly, the milling machine may be reliably utilized and not be overloaded for milling the holes.

Generally, by increasing a size of the distribution body element to be milled, a thickness of the distribution body element needs to be increased as well to maintain a uniform outflow speed of the electrolyte and/or the electric current. However, this may increase a milling time of the large distribution body due to the thickness of the distribution body and a one by one process for forming the holes. Subsequently, the milling machine may become unstable and a process accuracy may be reduced. In contrast, by providing distribution body elements, which may be assembled to form a large distribution body, the milling machine may form holes on the individual distribution body element within a processable range. Accordingly, a dense arrangement of the jet openings and/or drain openings on the individual distribution body element may be also viable, which may improve a plating uniformity of the substrate.

However, it is also possible to manufacture the distribution body elements with jet openings and/or drain openings by means of an alternative process such as 3D printing technology, which enables forming the dense arrangement of the openings.

According to the present invention, a modular distribution body for a chemical and/or electrolytic surface treatment of a substrate is also presented. The modular distribution body comprises a system of at least two distribution body elements as described above. Each distribution body element has at least one connecting area and the connecting area of one distribution body element is connected to the connecting area of another distribution body element.

A plurality of single distribution body elements may be assembled modularly like a puzzle, so that any desired shape and/or size of the modular distribution body may be manufactured. Accordingly, the distribution body elements, which may be preliminarily manufactured, may be connected to each other based on a customer's demand. Since the distribution body elements, which have a relative smaller size than the modular distribution body, the shape and/or size of the single distribution body element may not be limited to a targeted shape and/or size of the modular distribution body.

In an example, the connecting area of one distribution body element is chemically bonded to the connecting area of another distribution body element. In other words, contact surfaces and/or edges of each distribution body element to an adjacent distribution body element may be chemically bonded either directly and/or by means of an adhesive.

In an example, the connecting area of one distribution body element is welded to the connecting area of another distribution body element. The distribution body elements may be also mechanically connected to each other, for instance by means of clips, hooks, etc. However, any other mechanical or physical engagement of the distribution body elements such as welding by applying pressure and/or temperature or application of a magnetic force between the connecting areas may be also possible. In an example, the connecting area of one distribution body element and the connecting area of another distribution body element may be connected also by combining the chemical, mechanical and/or physical bonding.

In an example, an overall length of a side of the modular distribution body is a multiple of an element length of a side of one of the distribution body elements. Since the targeted modular distribution body may comprise a multiple of a distribution body element, an entire side length of the modular distribution body may correspond to a sum of the side length of each distribution body element.

In an example, the overall length of a side of the modular distribution body is at least about 1000 mm, preferably at least about 1800 mm, more preferably at least about 3000 mm. Accordingly, the modular distribution body may be applied for a substrate having a large size to uniformly plate the substrate.

The modular distribution body may be even more extended by connecting additional distribution body elements to an existing modular distribution body. Consequently, an active surface, in other words the distributing surface for the process fluid and/or the electric current may be also extended.

According to the present invention, a manufacturing method for at least two distribution body elements is presented. The method comprises, but not necessarily in this order:
- providing at least two plate shaped distribution body elements, wherein each distribution body element comprises jet openings for distributing a process fluid from inside the distribution body element to the substrate to be treated and drain openings for distributing the process fluid and an electric current through the distribution body element, wherein the process fluid is configured to return from the substrate as a cathode to an anode, whereas the electric current is configured to flow from the anode to the substrate as cathode, wherein the drain openings extend throughout, from one side to an opposite side of the distribution body element and the jet openings extend from an interior of the distribution body element to a surface of the distribution body element facing the substrate, wherein each drain opening is surrounded by several jet openings, and - arranging a connecting area at each distribution body element, wherein the connecting area of one distribution body element is configured to be connected to the connecting area of another distribution body element, and wherein the distribution body elements are connectable next to each other, such that, when connected, the process fluid and/or electric current is configured to be provided through the connecting areas to an active surface surrounded by the connecting areas

Hence, a flexible application of the distribution body depending on a size of the substrate to be treated may be facilitated. In other words, a number and/or an arrangement of the distribution body elements may be variably selected with respect to the size and/or a shape of the substrate. By combining several distribution body elements, a large distribution body may be easily provided. Further, a uniform outflow of the electrolyte and/or the electric current may be realized, which is necessary to direct a flow from the distribution body to the substrate.

In an example, the manufacturing method further comprises connecting the connecting area of one distribution body element to the connecting area of another distribution body element to form a modular distribution body comprising at least two distribution body elements. Accordingly, a plurality of single distribution body elements may be assembled modularly like a puzzle, so that any desired shape and/or size of the modular distribution body may be manufactured. Accordingly, the distribution body elements, which may be preliminarily manufactured, may be connected to each other according to a customer's demand.

In an example, the providing of the distribution body elements comprises 3D printing. The 3D printing may facilitate the manufacture of the distribution body elements. Particularly, the distribution body elements manufactured by the 3D printing may comprise a thicker wall than those manufactured by the conventional method, since the drain openings and/or jet openings may be also formed by the 3D printing instead of by applying a milling machine. The thicker distribution body elements may provide a uniform outflow of the process fluid and/or current distribution over the entire active surface even though the substrate may have a side length more than 3000 mm. Thus, an excellent plating quality of the large size substrate may be ensured.

In an example, the 3D printing comprises a generation of the drain openings. Accordingly, a big amount of manufacturing time may be saved compared to the conventional milling method for forming holes. Advantageously, the 3D printing method allows producing the distribution body elements with a narrower space between the drain openings compared to the conventional milling method. Further, a residual material between the drain openings may become stable by the 3D printing, which generally a limiting factor in the manufacture of the distribution body elements.

In an example, the providing of the distribution body elements comprises a drilling of the jet openings. In general, the jet openings may be arranged individually according to a customer's demand. Hence, a preparatory work for forming jet openings on the distribution body elements may be counterproductive in some cases. Accordingly, the jet openings may be provided separately after the distribution body elements comprising drain openings manufactured by the 3D printing.

In an example, the providing of the distribution body elements comprises injection molding and, preferably, cutting. The injection molding may be a very cost-effective manufacturing method, in which every shape and size of a distribution body or distribution body element may be manufactured and cut down to the size and shape on the customer's demand. Furthermore, technical limitations in hole spacing and the thickness of the distribution body in the conventional method can be overcome by injection molding.

In an example, the manufacturing method further comprises mounting the connected modular distribution body into a frame at least partially surrounding the connected modular distribution body. To utilize the modular distribution body in a substrate plating system, the modular distribution body may be safely held by the frame, which may at least partially encompass the entire modular distribution body and/or individual distribution body element. However, it is important to arrange the frame such that the outflow of the electrolyte and/or the electric current out of the modular distribution body may not be affected by the frame.

In an example, the frame may also comprise only one distribution body element. The distribution body element may be releasably attached to the frame.

In an example, the frame comprises a flow rectification zone and/or a fluid supply line. Accordingly, the frame may provide the modular distribution body the electrolyte, process fluid and/or the electric current and the frame may also enable a reverse flow of them. The frame may also further comprise customer's specific features for plating the substrate.

It should be noted that the above embodiments may be combined with each other irrespective of the aspect involved. Accordingly, the method may be combined with structural features and, likewise, the system may be combined with features described above with regard to the method.

These and other aspects of the present invention will become apparent from and elucidated with reference to the embodiments described hereinafter.

### BRIEF DESCRIPTION OF DRAWINGS

Exemplary embodiments of the invention will be described in the following with reference to the following drawings.
- Fig. 1: shows schematically and exemplarily an embodiment of a distribution body element according to the present invention.
- Fig. 2: shows schematically and exemplarily an embodiment of an arrangement of drain openings and jet openings according to the present invention.
- Fig. 3: shows schematically and exemplarily an embodiment of a modular distribution body according to the present invention.
- Fig. 4: show schematically and exemplarily an embodiment of a modular distribution body according to the present invention.
- Fig. 5: shows schematically and exemplarily an embodiment of a modular distribution body according to the present invention.
- Fig. 6: shows schematically and exemplarily an embodiment of an assembly of a modular distribution body according to the present invention.

### DESCRIPTION OF EMBODIMENTS

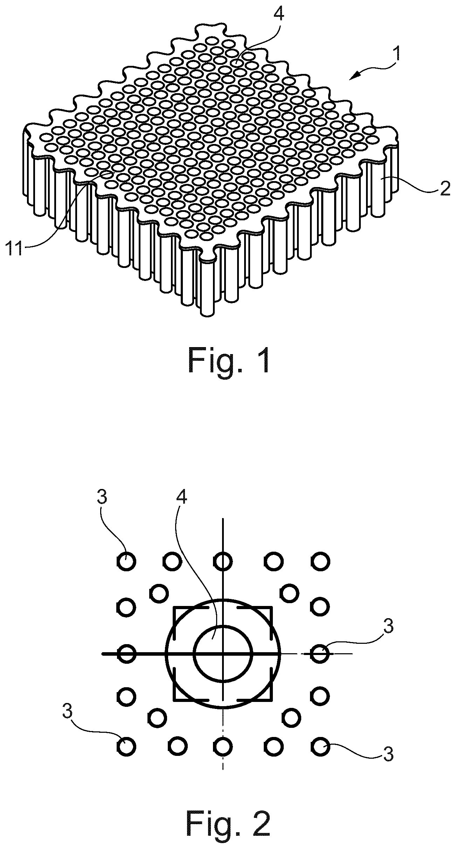

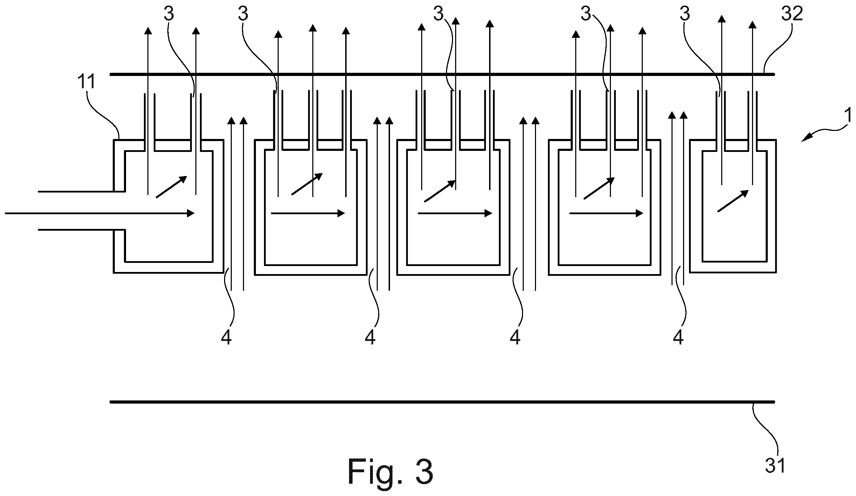

Fig. 1 shows a single distribution body element 1 for a chemical and/or electrolytic surface treatment of a substrate 32 (see Fig. 3). The distribution body element 1 is formed as a plate. The distribution body element 1 may be manufactured by a 3D printing or an injection molding such as cutting.

The distribution body element 1 comprises jet openings 3 for distributing a process fluid from inside the distribution body element 1 to the substrate 32 to be treated and drain openings 4 for distributing the process fluid and an electric current through the distribution body element 1. The drains openings 4 and/or the jet openings 3 may be arranged in a pattern to reach an optimum plating uniformity. The drain openings 4 and/or the jet openings 3 may be also arranged with a high density in the distribution body element 1. For instance, a density of the openings in the distribution body elements 1 is at least about 50 per dm², preferably at least about 100 per dm², more preferably at least about 500 per dm², and even more preferably at least about 950 per dm².

The drain openings 4 have a bigger diameter than the jet openings 3 (see Fig. 2). Each drain opening 4 is surrounded by several jet openings 3. As shown in Fig. 3, the drain openings 4 are formed throughout the distribution body element 1 from one side of the distribution body element 1 facing an anode 31 to an active surface 11 of the distribution body element 1 facing the substrate and/or a cathode 32. In contrast, the jet openings 3 extend from the inside of the distribution body element 1 to the active surface 11 of the distribution body element 1 facing the substrate 32.

The drain openings 4 and/or the jet openings 3 may be manufactured by the 3D printing or injection molding. However, the drain openings 4 may be preliminarily manufactured by the 3D printing or the injection molding and the jet openings 3 may be formed by drilling based on a customer's demand.

Each distribution body element 1 comprises at least one, preferably several connecting areas 2 surrounding an active surface 11. When the distribution body elements 1 are connected, the process fluid and/or electric current is provided through the active surface 11. The connecting area 2 of the distribution body element 1 is configured to be connected to a connecting area 2 of another distribution body element 1. Preferably, the connecting area 2 may be releasably attached to the connecting area 2 of the adjacent distribution body element 1 to facilitate an assembly of modular distribution body 10. The connecting areas 2 of the distribution body elements 1 may be mechanically connected and/or chemically bonded with each other, for instance by means of welding, adhesion, magnetic force, clips, hooks etc.

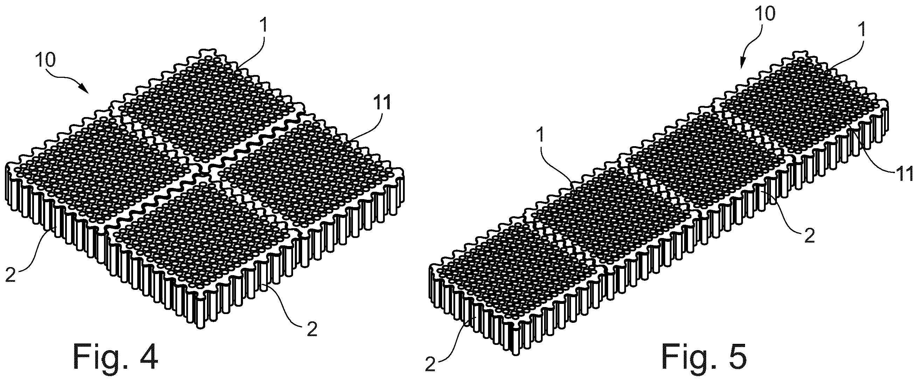

Fig. 4 and Fig. 5 show a modular distribution body 10 comprising a plurality of distribution body elements 1 in a square and a rectangular shape, respectively. Each distribution body element 1 is connected to the adjacent distribution body elements 1 according to a desired size and shape. Hence, the modular distribution body 10 formed by combining the distribution body element 1 via their connecting areas 2 may be utilized for a large size distribution body without any pressure drop over the entire active surface 11. Accordingly, an overall side length of the modular distribution body 10 is a sum of a side length of each distribution body element. For instance, the overall side length of the modular distribution body 10 is at least about 1000 mm, preferably at least about 1800 mm, more preferably at least about 3000 mm.

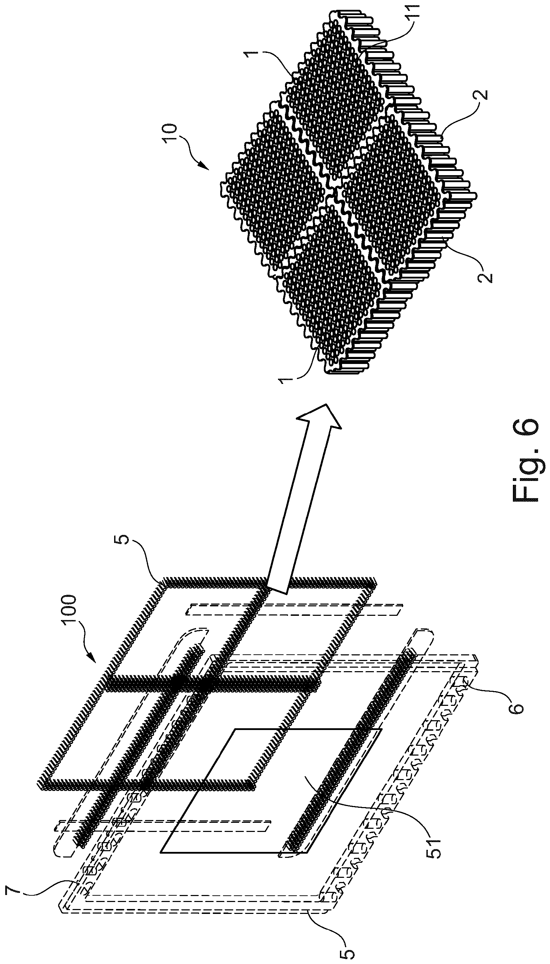

To utilize the modular distribution body 10 in a High Speed Plating system, the modular distribution body 10 may be engaged in a frame 5 as shown in Fig. 6. The frame 5 comprises an opening 51, through which the active surface 11 of the modular distribution body 10 may be arranged. The frame 5 surrounds at least partially the entire modular distribution body 10 and/or individual distribution body element 1. However, it is important to arrange the frame 5 such that the outflow of the electrolyte and/or the current distribution out of the modular distribution body 10 may not be affected by the frame 5. Further, it is also possible to arrange only one distribution body element 1 at the opening 51 of the frame 5. Hence, each frame 5 may comprise a different size of the opening 51 according to a number of the distribution body elements 1.

The frame 5 may be immersed in a tank containing the process fluid. The active surface 11 of the modular distribution body 10 faces the substrate 32 to be plated or an electrode, preferably an anode 31. The frame 5 may further comprise a flow rectification zone and/or a fluid supply line to provide the process fluid and/or the electric current through the modular distribution body 10 in a first direction and also in a reverse direction relative to the first direction.

It has to be noted that embodiments of the disclosure are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the disclosure has been illustrated and described in detail in the drawings and description, such illustration and description are to be considered illustrative or exemplary and not restrictive. The disclosure is not limited to the disclosed embodiments. Other variations to the disclosed embodiments can be understood and effected by those skilled in the art in practicing a claimed disclosure, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A system of at least two distribution body elements (1) for a chemical and/or electrolytic surface treatment of a substrate (32),
wherein each distribution body element (1) has a plate shape,
wherein each distribution body element (1) comprises jet openings (3) for distributing a process fluid from inside the distribution body element (1) to the substrate (32) to be treated and drain openings (4) for draining the process fluid and an electric current through the distribution body element, wherein the process fluid is configured to return from the substrate as a cathode to an anode, whereas the electric current is configured to flow from the anode to the substrate as cathode, wherein the drain openings (4) extend throughout, from one side to an opposite side of the distribution body element (1) and the jet openings (3) extend from an interior of the distribution body element (1) to a surface of the distribution body element (1) facing the substrate (32),
wherein each drain opening (4) is surrounded by several jet openings (3), wherein each distribution body element (1) has a connecting area (2) configured to be connected to a connecting area (2) of another distribution body element (1) to form a modular distribution body comprising at least two distribution body elements (1), and
wherein the distribution body elements are connectable next to each other, such that, when connected, the process fluid and/or electric current is configured to be provided through the connecting areas (2) to an active surface (11) surrounded by the connecting areas (2)

2. System according to claim 1, wherein the connecting area (2) of one distribution body element (1) is configured to be releasably connected to the connecting area (2) of another distribution body element.

3. System according to claim 1 or 2, wherein the connecting area (2) of one distribution body element (1) is configured to be mechanically connected to the connecting area (2) of another distribution body element.

4. System according to one of the preceding claims, wherein a density of openings (3, 4) in the distribution body elements (1) is at least about 50 per dm², preferably at least about 100 per dm², more preferably at least about 500 per dm², and even more preferably at least about 950 per dm².

5. A modular distribution body (10) for a chemical and/or electrolytic surface treatment of a substrate (32), comprising a system of at least two distribution body elements (1) according to one of the preceding claims,
wherein each distribution body element (1) has at least one connecting area, and wherein the connecting area (2) of one distribution body element (1) is connected to the connecting area (2) of another distribution body element (1) next to each other.

6. Modular distribution body (10) according to the preceding claim, wherein the connecting area (2) of one distribution body element (1) is chemically bonded to the connecting area (2) of another distribution body element (1).

7. Modular distribution body (10) according to claim 5, wherein the connecting area (2) of one distribution body element (1) is welded to the connecting area (2) of another distribution body element (1).

8. Modular distribution body (10) according to one of the preceding claims, wherein an overall length of a side of the modular distribution body (10) is a multiple of an element length of a side of one of the distribution body elements (1).

9. Modular distribution body (10) according to one of the preceding claims, wherein the overall length of a side of the modular distribution body (10) is at least about 1000 mm, preferably at least about 1800 mm, more preferably at least about 3000 mm.

10. A manufacturing method for at least two distribution body elements (1), comprising:
- providing at least two plate shaped distribution body elements (1), wherein each distribution body element (1) comprises jet openings (3) for distributing a process fluid from inside the distribution body element (1) to the substrate (32) to be treated and drain openings (4) for draining the process fluid and an electric current through the distribution body element, wherein the process fluid is configured to return from the substrate as a cathode to an anode, whereas the electric current is configured to flow from the anode to the substrate as cathode, wherein the drain openings (4) extend throughout, from one side to an opposite side of the distribution body element (1) and the jet openings (3) extend from an interior of the distribution body element (1) to a surface of the distribution body element (1) facing the substrate (32), wherein each drain opening (4) is surrounded by several jet openings (3), and
- arranging a connecting area (2) at each distribution body element, wherein the connecting area (2) of one distribution body element (1) is configured to be connected to the connecting area (2) of another distribution body element, and
wherein the distribution body elements are connectable next to each other, such that, when connected, the process fluid and/or electric current is configured to be provided through the connecting areas (2) to an active surface (11) surrounded by the connecting areas (2).

11. Manufacturing method according to the preceding claim, further comprising: connecting the connecting area (2) of one distribution body element (1) to the connecting area (2) of another distribution body element (1) to form a modular distribution body (10) comprising at least two distribution body elements (1).

12. Manufacturing method according to one of the preceding claims, wherein the providing of the distribution body elements (1) comprises 3D printing.

13. Manufacturing method according to the preceding claim, wherein the 3D printing comprises a generation of the drain openings (4).

14. Manufacturing method according to one of the preceding claims, wherein the providing of the distribution body elements (1) comprises a drilling of the jet openings (3).

15. Manufacturing method according to one of the claims 10 and 11, wherein the providing of the distribution body elements (1) comprises injection molding and, preferably, cutting.

16. Manufacturing method according to claim 11, further comprising: mounting the connected modular distribution body (10) into a frame (5) at least partially surrounding the connected modular distribution body (10).

17. Manufacturing method according to the preceding claim, wherein the frame (5) comprises a flow rectification zone (6) and/or a fluid supply line (7).

## Patentansprüche

1. System mit wenigstens zwei Verteilerkörperelementen (1) für eine chemische und/oder elektrolytische Oberflächenbehandlung eines Substrats (32),
wobei jedes Verteilerkörperelement (1) eine Plattenform aufweist,
wobei jedes Verteilerkörperelement (1) Strahlöffnungen (3) zum Verteilen eines Prozessfluids aus dem Inneren des Verteilerkörperelements (1) auf das zu behandelnde Substrat (32) und Abflussöffnungen (4) zum Ableiten des Prozessfluids und eines elektrischen Stroms durch das Verteilerkörperelement, wobei das Prozessfluid so eingerichtet ist, dass es vom Substrat als Kathode zu einer Anode zurückgeführt wird, umfasst, wobei der elektrische Strom so eingerichtet ist, dass er von der Anode zu dem Substrat als Kathode fließt, wobei die Abflussöffnungen (4) sich durchgehend von einer Seite zu einer gegenüberliegenden Seite des Verteilerkörperelements (1) erstrecken und die Strahlöffnungen (3) sich von einem Inneren des Verteilerkörperelements (1) zu einer Oberfläche des Verteilerkörperelements (1) erstrecken, die dem Substrat (32) zugewandt ist,
wobei jede Abflussöffnung (4) von mehreren Strahlöffnungen (3) umgeben ist, wobei jedes Verteilerkörperelement (1) einen Verbindungsbereich (2) aufweist, der dazu eingerichtet ist, mit einem Verbindungsbereich (2) eines anderen Verteilerkörperelements (1) verbunden zu werden, um einen modularen Verteilerkörper zu bilden, der zumindest zwei Verteilerkörperelemente (1) umfasst, und
wobei die Verteilerkörperelemente nebeneinander verbindbar sind, so dass, wenn sie verbunden sind, das Prozessfluid und/oder der elektrische Strom so eingerichtet ist, dass er durch die Verbindungsbereiche (2) zu einer von den Verbindungsbereichen (2) umgebenen aktiven Fläche (11) geleitet wird.

2. System nach Anspruch 1, wobei der Verbindungsbereich (2) eines Verteilerkörperelements (1) eingerichtet ist, um lösbar mit dem Verbindungsbereich (2) eines anderen Verteilerkörperelements verbunden zu werden.

3. System nach Anspruch 1 oder 2, wobei der Verbindungsbereich (2) eines Verteilerkörperelements (1) eingerichtet ist, um mechanisch mit dem Verbindungsbereich (2) eines anderen Verteilerkörperelements verbunden zu werden.

4. System nach einem der vorhergehenden Ansprüche, wobei die Dichte der Öffnungen (3, 4) in den Verteilerkörperelementen (1) zumindest etwa 50 pro dm², vorzugsweise zumindest etwa 100 pro dm², weiter bevorzugt zumindest etwa 500 pro dm² und noch weiter bevorzugt zumindest etwa 950 pro dm² beträgt.

5. Modularer Verteilerkörper (10) für eine chemische und/oder elektrolytische Oberflächenbehandlung eines Substrats (32), umfassend ein System aus zumindest zwei Verteilerkörperelementen (1) nach einem der vorhergehenden Ansprüche,
wobei jedes Verteilerkörperelement (1) zumindest einen Anschlussbereich aufweist, und
wobei der Verbindungsbereich (2) des einen Verteilerkörperelements (1) mit dem Verbindungsbereich (2) eines anderen Verteilerkörperelements (1) nebeneinander verbunden ist.

6. Modularer Verteilerkörper (10) nach dem vorhergehenden Anspruch, wobei der Verbindungsbereich (2) des einen Verteilerkörperelements (1) mit dem Verbindungsbereich (2) eines anderen Verteilerkörperelements (1) chemisch verbunden ist.

7. Modularer Verteilerkörper (10) nach Anspruch 5, wobei der Verbindungsbereich (2) eines Verteilerkörperelements (1) mit dem Verbindungsbereich (2) eines anderen Verteilerkörperelements (1) verschweißt ist.

8. Modularer Verteilerkörper (10) nach einem der vorhergehenden Ansprüche, wobei eine Gesamtlänge einer Seite des modularen Verteilerkörpers (10) ein Vielfaches einer Elementlänge einer Seite eines der Verteilerkörperelemente (1) ist.

9. Modularer Verteilerkörper (10) nach einem der vorangehenden Ansprüche, wobei die Gesamtlänge einer Seite des modularen Verteilerkörpers (10) zumindest etwa 1000 mm, vorzugsweise zumindest etwa 1800 mm, besonders bevorzugt zumindest etwa 3000 mm beträgt.

10. Herstellungsverfahren für zumindest zwei Verteilerkörperelemente (1), umfassend:
- Bereitstellen von zumindest zwei plattenförmigen Verteilerkörperelementen (1), wobei jedes Verteilerkörperelement (1) Strahlöffnungen (3) zum Verteilen eines Prozessfluids aus dem Inneren des Verteilerkörperelements (1) auf das zu behandelnde Substrat (32) und Ablassöffnungen (4) zum Ablassen des Prozessfluids und eines elektrischen Stroms durch das Verteilerkörperelement aufweist, wobei das Prozessfluid so eingerichtet ist, dass es vom Substrat als Kathode zu einer Anode zurückgeführt wird, wobei der elektrische Strom so eingerichtet ist, dass er von der Anode zu dem Substrat als Kathode fließt, wobei die Abflussöffnungen (4) sich durchgehend von einer Seite zu einer gegenüberliegenden Seite des Verteilerkörperelements (1) erstrecken und die Strahlöffnungen (3) sich von einem Inneren des Verteilerkörperelements (1) zu einer Oberfläche des Verteilerkörperelements (1) erstrecken, die dem Substrat (32) zugewandt ist,
wobei jede Abflussöffnung (4) von mehreren Strahlöffnungen (3) umgeben ist, und
- Anordnen eines Verbindungsbereichs (2) an jedem Verteilerkörperelement, wobei der Verbindungsbereich (2) eines Verteilerkörperelements (1) dazu eingerichtet ist, mit dem Verbindungsbereich (2) eines anderen Verteilerkörperelements verbunden zu werden, und
wobei die Verteilerkörperelemente nebeneinander verbindbar sind, so dass im verbundenen Zustand das Prozessfluid und/oder der elektrische Strom durch die Verbindungsbereiche (3) zu einer von den Verbindungsbereichen (2) umgebenen aktiven Fläche (11) eingerichtet ist.

11. Herstellungsverfahren nach dem vorhergehenden Anspruch, ferner umfassend: Verbinden des Verbindungsbereichs (2) eines Verteilerkörperelements (1) mit dem Verbindungsbereich (2) eines anderen Verteilerkörperelements (1), um einen modularen Verteilerkörper (10) mit zumindest zwei Verteilerkörperelementen (1) zu bilden.

12. Herstellungsverfahren nach einem der vorhergehenden Ansprüche, wobei das Bereitstellen der Verteilerkörperelemente (1) einen 3D-Druck umfasst.

13. Herstellungsverfahren nach dem vorhergehenden Anspruch, wobei der 3D-Druck eine Erzeugung der Ablauföffnungen (4) umfasst.

14. Herstellungsverfahren nach einem der vorangehenden Ansprüche, wobei das Bereitstellen der Verteilerkörperelemente (1) ein Bohren der Strahlöffnungen (3) umfasst.

15. Herstellungsverfahren nach einem der Ansprüche 10 und 11, wobei das Bereitstellen der Verteilerkörperelemente (1) ein Spritzgießen und vorzugsweise ein Schneiden umfasst.

16. Herstellungsverfahren nach Anspruch 11, ferner umfassend: Befestigen des verbundenen modularen Verteilerkörpers (10) in einem Rahmen (5), der den verbundenen modularen Verteilerkörper (10) zumindest teilweise umgibt.

17. Herstellungsverfahren nach dem vorhergehenden Anspruch, wobei der Rahmen (5) eine Strömungsgleichrichterzone (6) und/oder eine Fluidzufuhrleitung (7) aufweist.

## Revendications

1. Système constitué d'au moins deux éléments de corps de distribution (1) pour un traitement de surface chimique et/ou électrolytique d'un substrat (32),
dans lequel chaque élément de corps de distribution (1) a une forme de plaque,
dans lequel chaque élément de corps de distribution (1) comprend des orifices de jet (3) pour distribuer un fluide de traitement depuis l'intérieur de l'élément de corps de distribution (1) jusqu'au substrat (32) à traiter et des orifices d'évacuation (4) pour évacuer le fluide de traitement et un courant électrique à travers l'élément de corps de distribution,
dans lequel le fluide de traitement est configuré pour retourner à partir du substrat faisant office de cathode vers une anode, tandis que le courant électrique est configuré pour circuler de l'anode au substrat faisant office de cathode,
dans lequel les orifices d'évacuation (4) s'étendent partout, depuis un premier côté jusqu'à un côté opposé de l'élément de corps de distribution (1) et les orifices de jet (3) s'étendent à partir d'un intérieur de l'élément de corps de distribution (1) jusqu'à une surface de l'élément de corps de distribution (1) faisant face au substrat (32), dans lequel chaque orifice d'évacuation (4) est entouré par plusieurs orifices de jet (3), dans lequel chaque élément de corps de distribution (1) a une zone d'assemblage (2) configurée pour être assemblée à une zone d'assemblage (2) d'un autre élément de corps de distribution (1) pour former un corps de distribution modulaire comprenant au moins deux éléments de corps de distribution (1), et
dans lequel les éléments de corps de distribution peuvent être assemblés les uns à côté des autres, de telle sorte que, lorsqu'ils sont assemblés, le fluide de traitement et/ou le courant électrique est configuré pour être fourni à travers les zones d'assemblage (2) à une surface active (11) entourée par les zones d'assemblage (2).

2. Système selon la revendication 1, dans lequel la zone d'assemblage (2) d'un élément de corps de distribution (1) est configurée pour être assemblée de manière amoviable à la zone d'assemblage (2) d'un autre élément de corps de distribution.

3. Système selon la revendication 1 ou 2, dans lequel la zone d'assemblage (2) d'un élément de corps de distribution (1) est configurée pour être mécaniquement assemblée à la zone d'assemblage (2) d'un autre élément de corps distribution.

4. Système selon l'une des revendications précédentes, dans lequel une densité d'orifices (3, 4) dans les éléments de corps de distribution (1) est au moins d'environ 50 par dm², de manière préférée au moins d'environ 100 par dm², de manière plus préférée au moins d'environ 500 par dm², et de manière encore plus préférée au moins d'environ 950 par dm².

5. Corps de distribution modulaire (10) pour un traitement de surface chimique et/ou électrolytique d'un substrat (32), comprenant un système constitué d'au moins deux éléments de corps de distribution (1) selon l'une des revendications précédentes,
dans lequel chaque élément de corps de distribution (1) a au moins une zone d'assemblage, et
dans lequel la zone d'assemblage (2) d'un élément de corps de distribution (1) est assemblée à la zone d'assemblage (2) d'un autre élément de corps de distribution (1) l'un à côté de l'autre.

6. Corps de distribution modulaire (10) selon la revendication précédente, dans lequel la zone d'assemblage (2) d'un élément de corps de distribution (1) est chimiquement liée à la zone d'assemblage (2) d'un autre élément de corps de distribution.

7. Corps de distribution modulaire (10) selon la revendication 5, dans lequel la zone d'assemblage (2) d'un élément de corps de distribution (1) est soudée à la zone d'assemblage (2) d'un autre élément de corps distribution (1).

8. Corps de distribution modulaire (10) selon l'une des revendications précédentes, dans lequel une longueur totale d'un côté du corps de distribution modulaire (10) est un multiple d'une longueur d'élément d'un côté de l'un des éléments de corps de distribution (1).

9. Corps de distribution modulaire (10) selon l'une des revendications précédentes, dans lequel la longueur totale d'un côté du corps de distribution modulaire (10) est au moins d'environ 1 000 mm, de manière préférée au moins d'environ 1 800 mm, de manière plus préférée au moins d'environ 3 000 mm.

10. Procédé de fabrication d'au moins deux éléments de corps de distribution (1), comprenant de :
- fournir au moins deux éléments de corps de distribution en forme de plaque (1), dans lequel chaque élément de corps de distribution (1) comprend des orifices de jet (3) pour distribuer un fluide de traitement depuis l'intérieur de l'élément de corps de distribution (1) jusqu'au substrat (32) à traiter et des orifices d'évacuation (4) pour évacuer le fluide de traitement et un courant électrique à travers l'élément de corps de distribution, dans lequel le fluide de traitement est configuré pour retourner à partir du substrat faisant office de cathode vers une anode, tandis que le courant électrique est configuré pour circuler de l'anode au substrat faisant office de cathode,
dans lequel les orifices d'évacuation (4) s'étendent partout, depuis un premier côté jusqu'à un côté opposé de l'élément de corps de distribution (1) et les orifices de jet (3) s'étendent à partir d'un intérieur de l'élément de corps de distribution (1) jusqu'à une surface de l'élément de corps de distribution (1) faisant face au substrat (32), dans lequel chaque orifice d'évacuation (4) est entouré par plusieurs orifices de jet (3), et
- agencer une zone d'assemblage (2) sur chaque élément de corps de distribution, dans lequel la zone d'assemblage (2) de l'élément de corps de distribution (1) est configurée pour être assemblée à la zone d'assemblage (2) d'un autre élément de corps distribution, et
dans lequel les éléments de corps de distribution peuvent être assemblés les uns à côté des autres, de telle sorte que, lorsqu'ils sont assemblés, le fluide de traitement et/ou le courant électrique est configuré pour être fourni à travers les zones d'assemblage (2) à une surface active (11) entourée par les zones d'assemblage (2).

11. Procédé de fabrication selon la revendication précédente, comprenant en outre de :
assembler la zone d'assemblage (2) d'un élément de corps de distribution (1) à la zone d'assemblage (2) d'un autre élément de corps de distribution (1) pour former un corps de distribution modulaire (10) comprenant au moins deux éléments de corps de distribution (1).

12. Procédé de fabrication selon l'une des revendications précédentes, dans lequel la fourniture des éléments de corps de distribution (1) comprend une impression 3D.

13. Procédé de fabrication selon la revendication précédente, dans lequel l'impression 3D comprend une génération des orifices d'évacuation (4).

14. Procédé de fabrication selon l'une des revendications précédentes, dans lequel la fourniture des éléments de corps de distribution (1) comprend un perçage des orifices de jet (3).

15. Procédé de fabrication selon l'une des revendications 10 et 11, dans lequel la fourniture des éléments de corps de distribution (1) comprend un moulage par injection et, de préférence, une découpe.

16. Procédé de fabrication selon la revendication 11, comprenant en outre de monter le corps de distribution modulaire (10) assemblé dans un châssis (5) entourant au moins partiellement le corps de distribution modulaire (10) assemblé.

17. Procédé de fabrication selon la revendication précédente, dans lequel le châssis (5) comprend une zone de rectification d'écoulement (6) et/ou une conduite d'alimentation en fluide (7).
